Europäisches Patentamt

European Patent Office

Office européen des brevets

(11) Veröffentlichungsnummer: **0 395 130**
**A2**

(12) **EUROPÄISCHE PATENTANMELDUNG**

(21) Anmeldenummer: 90200764.0

(51) Int. Cl.⁵: **F16C 33/20, F16C 33/04**

(22) Anmeldetag: 29.03.90

(30) Priorität: 27.04.89 DE 3913893

(43) Veröffentlichungstag der Anmeldung:
**31.10.90 Patentblatt 90/44**

(84) Benannte Vertragsstaaten:
**DE ES FR GB IT**

(71) Anmelder: **KOLBENSCHMIDT**
**Aktiengesellschaft**
**Karl-Schmidt-Strasse 8/12 Postfach 1351**
**D-7107 Neckarsulm(DE)**

(72) Erfinder: **Braus, Jürgen**
**Johann-Jakob-Astor-Strasse 53**
**D-6909 Walldorf(DE)**
Erfinder: **Pfestorf, Harald**
**Panoramastrasse 18/1**
**D-7101 Untereisesheim(DE)**

(74) Vertreter: **Rieger, Harald, Dr.**
**Reuterweg 14**
**D-6000 Frankfurt a.M.(DE)**

(54) **Werkstoff für Mehrschicht-Gleitlager.**

(57) Ein Werkstoff für Mehrschicht-Gleitlager besteht aus einem Stützrücken und einer mit diesem verbundenen Gleitschicht aus einer Matrix aus fluorhaltigem Polymerem, in der Metallpulver feindispergiert ist.

Zur Herstellung von Lagerschalen für Pleuel- und Lagerzapfen für Kurbelwellen in Hubkolbenmaschinen enthält das fluorhaltige Polymere Metallfluorid, Metalloxifluorid, monoklin kristallisiertes PVDF, amorphes PVDF sowie 10 bis 90 Masse-% an neuartigem Polymerem, das in einem mittels CuKα-Strahlung erstellten Röntgendiffraktogramm ein scharfes Intensitätsmaximum bei einem doppelten Braggwinkel von 2 Θ = 18,07 ± 0,03° sowie einen Schmelzbereich von 320 bis 350°C besitzt.

F i g.3

## Werkstoff für Mehrschicht-Gleitlager

Die Erfindung betrifft einen Werkstoff für Mehrschicht-Gleitlager, bestehend aus einem ein- oder mehrschichtigen Stützrücken und einer mit diesem verbundenen 0,01 bis 0,20 mm, vorzugsweise 0,05 bis 0,08 mm, dicken Gleitschicht aus einer Matrix aus fluorhaltigem Polymerem, in der 5 bis 50 Masse-%, vorzugsweise 30 bis 40 Masse-%, von eine hohe Affinität zu Fluor besitzendem Metallpulver mit einer Korngröße von $\leq$ 40 μm feindispergiert ist, sowie ein Verfahren zur Herstellung des Werkstoffs.

Aus der EP-PS 0 044 577 und der DE-PS 29 28 061 ist ein Werkstoff für Gleitlager mit Kunststoff-Gleitschicht bekannt, der aus einem metallischen Stützrücken, vorzugsweise Stahlstützrücken, mit einer darauf befindlichen 30 bis 500 μm dicken Gleitschicht aus die Matrix bildendem fluorhaltigem Polymerem, d.h. Polyvinylidenfluorid (PVDF), mit 5 bis 50 Vol.-% Bleiteilchen mit einer Korngröße von $\leq$ 50 μm besteht, und die das Gleitverhalten verbessernde Stoffe wie PTFE, MoS$_2$, Graphit als Einlagerungen in feindisperser Form enthalten kann. Die Kunststoff-Gleitschicht ist in vorteilhafter Weise auf eine auf dem Stützrücken porös aufgesinterten oder aufgespritzten Rauhschicht mit einer Dicke von 250 bis 350 μm aus gute Gleiteigenschaften aufweisendem metallischen Werkstoff, vorzugsweise Bronze, aufgetragen, wobei das Lückenvolumen der Rauhschicht mit dem Kunststoff der Gleitschicht ausgefüllt ist.

Die aus diesem Werkstoff hergestellten Mehrschicht-Gleitlager besitzen zwar einen relativ breiten Einsatzbereich, lassen sich jedoch nicht für die Lagerung von Pleuel- und Lagerzapfen von Kurbelwellen sowie Nockenwellen und Massenausgleichswellen in Hubkolbenmaschinen, insbesondere in Verbrennungskraftmaschinen, verwenden, da die aus fluorhaltigem Polymerem bestehende Gleitschicht im Betrieb aufschmilzt, als Folge davon Ablagerungen an den Gleitpartnern entstehen und schließlich die Gleitschicht zerstört wird.

Es ist die Aufgabe der vorliegenden Erfindung, den eingangs beschriebenen Werkstoff für Mehrschicht-Gleitlager so zu modifizieren, daß daraus gefertigte Lagerschalen für die Lagerung von Pleuel- und Lagerzapfen von Kurbelwellen sowie Nockenwellen und Massenausgleichswellen in Hubkolbenmaschinen, insbesondere in Verbrennungskraftmaschinen, geeignet sind, d.h. ihre Lebensdauer verlängert und damit die Standzeit der Kolbenmaschine deutlich erhöht werden. Gleichzeitig soll ihre Elastizität so verbessert werden, daß die Schwingungen der Kurbelwelle, Nockenwelle und Massenausgleichswelle deutlich gedämpft und damit ein wesentlich ruhigerer und schallärmerer Lauf der Hubkolbenmaschine gewährleistet ist.

Die Lösung dieser Aufgabe besteht darin, daß das fluorhaltige Polymere 0,5 bis 5,0 Masse-% Metallfluorid sowie 0,5 bis 5,0 Masse-% Metalloxifluorid enthält und aus 2,5 bis 25 Masse-% monoklin kristallisiertem PVDF, 2,5 bis 40 Masse-% amorphem PVDF sowie 10 bis 90 Masse-% neuartigem Polymerem, das in einem mittels CuKα-Strahlung erstellten Röntgendiffraktogramm ein scharfes Intensitätsmaximum bei einem doppelten Braggwinkel von 2 Θ = 18,07 ± 0,03° sowie einen Schmelzbereich von 320 bis 350°C besitzt, besteht und frei von ortho-rhombisch kristallisiertem PVDF ist.

Vorzugsweise beträgt der Gehalt an neuartigem Polymerem 15 bis 50 Masse-%.

Als Metallpulver, die eine besonders hohe Affinität zu Fluor besitzen, kommen insbesondere solche aus Blei, Zinn, Zink, Indium, Thallium, Kadmium, Wismut, Barium, Kupfer, Silber und deren Legierung einzeln oder zu mehreren in Betracht, wobei auch die bekannten Lagermetalle auf Blei- und Zinn-Basis mitumfaßt sind.

Der erfindungsgemäß aufgebaute Werkstoff für Mehrschicht-Gleitlager zeichnet sich nicht nur durch einen hohen Verschleißwiderstand, sondern auch durch eine hohe Druckfestigkeit bei den üblichen Öltemperaturen bis 220°C aus, so daß eine hohe Lebensdauer der daraus gefertigten Gleitlager auch nach vergleichsweise langen Laufzeiten der Kolbenmaschine gewährleistet ist. Darüber hinaus werden die durch die Kurbelwelle verursachten Schwingungen in erheblichem Maße gedämpft, wodurch ein wesentlich ruhigerer und schallärmerer Lauf der Hubkolbenmaschine erreicht wird.

Die Matrix kann zur Verbesserung der Gleiteigenschaften sowie zur Stabilisierung noch 1 bis 20 Masse-%, vorzugsweise 5 bis 15 Masse-%, feindispergierte Pulverteilchen, bestehend aus PTFE, MoS$_2$, Graphit, ZnS, BaSO$_4$, Stearaten einzeln oder zu mehreren, enthalten, wobei die Korngröße dieser Pulverteilchen zweckmäßigerweise in Anpassung an die Metallpulverteilchen $\leq$ 40 μm ist.

Der Werkstoff für Mehrschicht-Gleitlager kann auch in der Matrix 1 bis 10 Gew.-% Fasern, vorzugsweise Kohlenstoffasern und/oder Aramidfasern, enthalten.

Im Rahmen der vorzugsweisen Ausgestaltung des erfindungsgemäßen Werkstoffs für Mehrschicht-Gleitlager sind in der 15 bis 20 Masse-% monoklines PVDF enthaltenden Matrix aus neuartigem Polymerem noch 15 bis 25 Masse-% amorphes PVDF, 1 bis 3 Masse-% Bleifluorid, 1 bis 3 Masse-% Bleioxifluorid und 5 bis 25 Masse-% Blei sowie ggf. noch 3 bis 10 Masse-% PTFE eingelagert.

Eine bevorzugte Ausführungsform der Matrix besteht in der Zusammensetzung 25 Masse-% neuartiges fluorhaltiges Polymeres, 25 Masse-% amorphes PVDF, 10 Masse-% monoklin kristallisiertes PVDF, 25 Masse-% Blei, 3 Masse-% Bleifluorid, 2 Masse-% Bleioxifluorid, 10 Masse-% PTFE.

In einer weiteren Zusammensetzung kann die Matrix aus 50 Masse-% neuartigem fluorhaltigem Polymerem, 10 Masse-% monoklin kristallisiertes PVDF, 10 Masse-% amorphes PVDF, 15 Masse-% PTFE, 2,5 Masse-% Bleifluorid, 2,5 Masse-% Bleioxifluorid und 10 Masse-% Blei bestehen.

Die erfindungsgemäß aufgebaute Gleitschicht ist unmittelbar mit der mechanisch oder chemisch auf gerauhten Oberfläche des Stützrückens verbunden, der aus Stahl, Gußeisen, Bronze, Aluminium, Aluminiumlegierung, faserverstärktem Kunststoff, Keramik, den Verbundmaterialien Stahl/Weißmetall, Stahl/Bronze, Stahl/Aluminiumlegierung, hochfeste Aluminiumlegierung/Aluminiumlagerlegierung oder dergleichen bestehen kann.

Es ist auch die Möglichkeit gegeben, die Gleitschicht über eine Zwischenschicht aus porös aufgesintertem, aufgespritztem oder durch Kathodenzerstäubung auf getragenem metallischen Gleitwerkstoff, vorzugsweise Bronze oder Aluminiumlagerlegierung, mit dem Stützrücken zu verbinden. Mit dem Gleitschichtwerkstoff ist das Lückenvolumen der Poren so ausgefüllt, daß über der Schicht des metallischen Gleitwerkstoffs die Gleitschicht gebildet ist.

Darüber hinaus kann die Gleitschicht mit dem Stützrücken verklebt werden.

Nach einem vorzugsweisen Merkmal der Erfindung kann der Gleitlagerwerkstoff so ausgebildet sein, daß der Gehalt an neuartigem Polymerem von der Lauffläche der Gleitschicht in Richtung zum Stützrücken hin linear oder exponentiell abnimmt. Der Gehalt des neuartigen Polaren beträgt dann 80 bis 90 Masse-% an der Lauffläche und 10 bis 20 Masse-% am Stützrücken.

Im Rahmen der Ausgestaltung der Erfindung kann die Gleitschicht auch aus mehreren miteinander verbundenen Einzelschichten aufgebaut sein, wobei der Gehalt des neuartigen Polymeren der Einzelschichten unterschiedlich sein kann.

Bei dem Verfahren zur Herstellung des Gleitlagerwerkstoffs wird ein Gemisch aus 30 bis 80 Masse-% fluorhaltigem Polymerem und 5 bis 50 Masse-% eine hohe Affinität zu Fluor besitzendem Metallpulver auf einen Stützrücken aufgetragen, aufgewalzt und auf eine Temperatur von > 290°C, vorzugsweise 300 bis 340°C, erwärmt, bei dieser Temperatur 0,5 bis 3,5 min, vorzugsweise 1,0 bis 2,0 min, gehalten und dann in einer Zeit von 0,5 bis 10 min, vorzugsweise 4 min, auf 100°C kontinuierlich abgekühlt.

Die Herstellung des Gleitlagerwerkstoffs kann sowohl auf kontinuierliche Weise, indem ein bandförmiger Stützrücken fortlaufend beschichtet wird, als auch in diskontinuierlicher Weise, indem streifenförmige Abschnitte eines Stützrückens einzeln beschichtet werden, erfolgen.

Im folgenden ist die Erfindung anhand eines Ausführungsbeispiels sowie von Zeichnungen näher erläutert. Es zeigen:

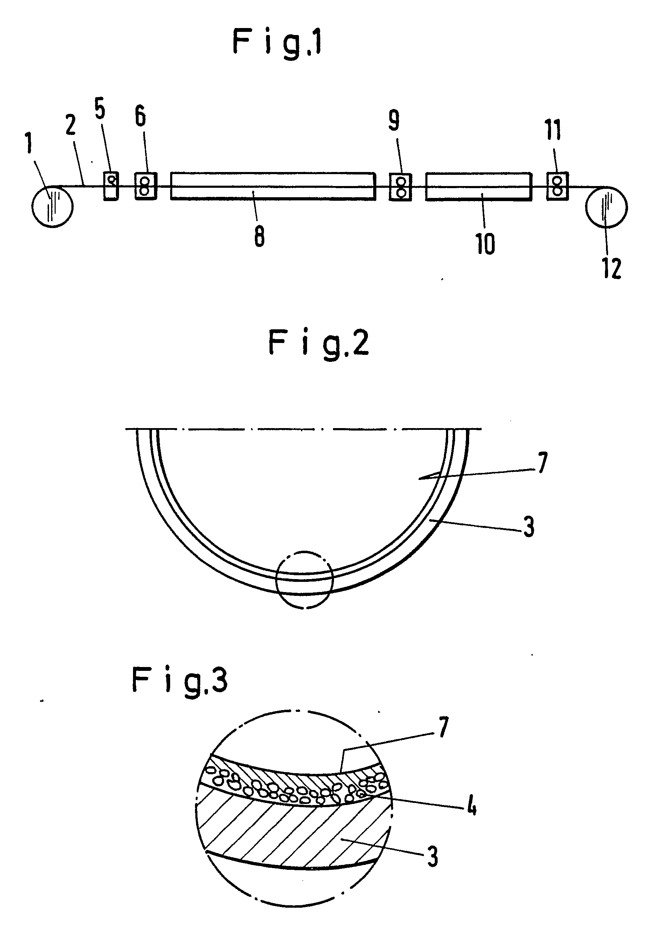

Fig. 1 eine schematische Darstellung der Vorrichtung zur Durchführung des Verfahrens und Herstellung des Werkstoffs für Mehrschicht-Gleitlager,

Fig. 2 einen Schnitt durch den Werkstoff für Mehrschicht-Gleitlager,

Fig. 3 eine ausschnittsweise vergrößerte Darstellung aus Fig. 2.

Das auf dem Haspel (1) aufgewickelte Band (2), das aus dem als Stützrücken dienenden Stahlband (3) und der darauf aus Bleibronze porös gesinterten Rauhgrundschicht (4) besteht, wird kontinuierlich von dem Haspel (1) abgewickelt und rauhgrundseitig aus einem mit einem Rührwerk ausgestatteten Behälter (5) mit einer Pulvermischung aus 60 Masse-% PVDF, 25 Masse-% Blei und 15 Masse-% PTFE gleichmäßig beschichtet. Nachdem das Band (2) das Walzgerüst (6) durchlaufen hat, in dem die offenen Poren der Rauhgrundschicht (4) so mit der Pulvermischung ausgefüllt sind, daß über den Spitzen der Rauhgrundschicht (4) eine Gleitschicht (7) vorhanden ist, wird das beschichtete Band (2) durch den Durchlaufofen (8) geführt und auf 320°C für die Dauer von 1,5 min erwärmt. Dabei wird das PVDF so aufgeschmolzen, daß neben fluorhaltigem Polymerem, das durch ein in einem mittels CuKα-Strahlung erstellten Röntgendiffraktogramm bei einem doppelten Braggwinkel von $2\,\Theta = 18{,}07 \pm 0{,}03°$ liegendes Intensitätsmaximum sowie einen Schmelzbereich von 320 bis 350°C charakterisiert ist, noch 15 Masse-% monoklin kristallisiertes PVDF, 24 Masse-% amorphes PVDF, 21 Masse-% Blei, 15 Masse-% PTFE, 3,5 Masse-% Bleifluorid sowie 3,5 Masse-% Bleioxidluorid vorhanden sind. Nach dem Austritt aus dem Durchlaufofen (8) wird das fluorhaltige Polare in dem Walzgerüst (9) nachverdichtet sowie geglättet und anschließend in dem Durchlaufofen (10) innerhalb von 5 min kontinuierlich auf eine Temperatur von etwa 100°C abgekühlt. In dem nachfolgenden Walzgerüst (11) wird der hergestellte Mehrschicht-Gleitlagerwerkstoff kalibriert und schließlich auf den Haspel (1) aufgewikkelt. Aus dem bandförmigen Mehrschicht-Gleitlagerwerkstoff lassen sich ohne jede Nachbehandlung bzw. Nachbearbeitung ohne Schwierigkeiten Gleitlagerschalen herstellen, die geeignet sind, einen ruhigeren und schallärmeren Lauf von Pleuel- und Lagerzapfen von Kurbelwellen sowie von Nokkenwellen und Massenausgleichswellen zu gewährleisten.

## Ansprüche

1. Werkstoff für Mehrschicht-Gleitlager, bestehend aus einem ein- oder mehrschichtigen Stützrücken und einer mit diesem verbundenen 0,01 bis 0,20 mm, vorzugsweise 0,05 bis 0,08 mm, dicken Gleitschicht aus einer Matrix aus fluorhaltigem Polymerem, in der 5 bis 50 Masse-%, vorzugsweise 30 bis 40 Masse-%, eines eine hohe Affinität zu Fluor besitzenden Metallpulvers mit einer Korngröße von $\leq$ 40 $\mu$m feindispergiert ist, dadurch gekennzeichnet, daß das fluorhaltige Polymere 0,5 bis 5,0 Masse-% Metallfluorid sowie 0,5 bis 5,0 Masse-% Metalloxifluorid enthält und aus 2,5 bis 25 Masse-% monoklin kristallisiertem PVDF, 2,5 bis 40 Masse-% amorphem PVDF sowie 10 bis 90 Masse-% neuartigem Polymerem, das in einem mittels CuK$\alpha$-Strahlung erstellten Röntgendiffraktogramm ein scharfes Intensitätsmaximum bei einem doppelten Braggwinkel von 2 $\Theta$ = 18,07 $\pm$ 0,03$^\circ$ sowie einen Schmelzbereich von 320 bis 350$^\circ$C besitzt, besteht und frei von ortho-rhombisch kristallisiertem PVDF ist, zur Herstellung von Lagerschalen für Pleuel- und Lagerzapfen von Kurbelwellen sowie für Nockenwellen und Massenausgleichswellen in Hubkolbenmaschinen, insbesondere Verbrennungskraftmaschinen.

2. Werkstoff nach Anspruch 1, dadurch gekennzeichnet, daß der Gehalt an neuartigem Polymerem 15 bis 50 Masse-% beträgt.

3. Werkstoff nach den Ansprüchen 1 und 2, dadurch gekennzeichnet, daß als eine hohe Affinität zu Fluor besitzendes Metallpulver solches aus Blei, Zinn, Zink, Indium, Thallium, Kadmium, Wismut, Barium, Kupfer, Silber und deren Legierungen einzeln oder zu mehreren in dem fluorhaltigen Polymeren dispergiert ist.

4. Werkstoff nach den Ansprüchen 1 bis 3, gekennzeichnet durch den Zusatz von 1 bis 20 Masse-%, vorzugsweise 5 bis 15 Masse-% feindispergierten Pulverteilchen mit einer Korngröße von $\leq$ 40 $\mu$m, bestehend aus PTFE, MoS$_2$, Graphit, ZnS, BaSO$_4$ und/oder Stearaten.

5. Werkstoff nach einem oder mehreren der Ansprüche 1 bis 4, gekennzeichnet durch den Zusatz von 1 bis 10 Gew.-% Fasern, vorzugsweise Kohlenstoffasern und/oder Aramidfasern.

6. Werkstoff nach den Ansprüchen 1 bis 5, dadurch gekennzeichnet, daß die Gleitschicht unmittelbar mit der mechanisch oder chemisch auf gerauhten Oberfläche des aus Stahl, Gußeisen, Bronze, Aluminium, Aluminiumlegierung, faserverstärktem Kunststoff, Keramik bestehenden einschichtigen oder des aus Stahl/Weißmetall, Stahl/Bronze, Stahl/Aluminiumlagerlegierung, hochfeste Aluminiumlegierung/Aluminiumlagerlegierung oder dergleichen bestehenden mehrschichtigen Stützrückens verbunden ist.

7. Werkstoff nach den Ansprüchen 1 bis 6, dadurch gekennzeichnet, daß die Gleitschicht über eine porös auf den Stützrücken aufgesinterte, auf gespritzte oder durch Kathodenzerstäubung auf getragene, aus einem metallischen Gleitwerkstoff bestehende Schicht, vorzugsweise aus Bronze, Aluminiumlagerlegierung, mit dem Stützrücken unter Ausfüllung der Poren und Ausbildung der Gleitschicht über der Schicht des metallischen Gleitwerkstoffs verbunden ist.

8. Werkstoff nach den Ansprüchen 1 bis 7, dadurch gekennzeichnet, daß der Gehalt an neuartigem Polymerem von der Lauffläche der Gleitschicht zum Stützrücken hin linear oder exponentiell abnimmt.

9. Werkstoff nach Anspruch 8, dadurch gekennzeichnet, daß der Gehalt an neuartigem Polymerem an der Lauffläche 80 bis 90 Masse-% und am Stützrücken 10 bis 20 Masse-% beträgt.

10. Werkstoff nach einem oder mehreren der Ansprüche 1 bis 9, dadurch gekennzeichnet, daß die Gleitschicht aus mehreren miteinander verbundenen Einzelschichten aufgebaut ist.

11. Werkstoff nach Anspruch 9, dadurch gekennzeichnet, daß die Einzelschichten unterschiedliche Gehalte an neuartigem Polymerem aufweisen.

12. Verfahren zur Herstellung des Werkstoffs nach den Ansprüchen 1 bis 11, dadurch gekennzeichnet, daß ein Gemisch aus 30 bis 80 Masse-% fluorhaltigem Polymerem und 5 bis 50 Masse-% eine hohe Affinität zu Fluor besitzendem Metallpulver auf einen Stützrücken aufgetragen, aufgewalzt, auf eine Temperatur von > 290$^\circ$C, vorzugsweise 300 bis 340$^\circ$C, erwärmt, bei dieser Temperatur 0,5 bis 3,5 min, vorzugsweise 1,0 bis 2,0 min, gehalten und dann in einer Zeit von 0,5 bis 10 min, vorzugsweise 4 min, auf 100$^\circ$C kontinuierlich abgekühlt wird.

13. Verfahren nach Anspruch 12, dadurch gekennzeichnet, daß nach Erreichen einer Temperatur von ca. 180$^\circ$C eine kontinuierliche Abkühlung auf eine Temperatur von 120 bis 115$^\circ$C mit einer Geschwindigkeit von ca. 50$^\circ$C/min erfolgt.

# Fig.1

# Fig.2

# Fig.3